(19) Europäisches Patentamt
European Patent Office
Office européen des brevets

(11) EP 0 536 890 B1

(12) EUROPEAN PATENT SPECIFICATION

(45) Date of publication and mention of the grant of the patent:
**17.01.1996 Bulletin 1996/03**

(21) Application number: **92307890.1**

(22) Date of filing: **28.08.1992**

(51) Int Cl.6: **C08L 101/00**, C08L 71/00, C08K 5/00
// (C08L101/00, 71:00), (C08L71/00, 101:00)

# (54) Antistatic polymeric compositions

Antistatische Polymerzusammensetzung

Composition polymérique antistatique

(84) Designated Contracting States:
**AT BE CH DE DK ES FR GB GR IT LI LU MC NL PT SE**

(30) Priority: **10.10.1991 GB 9121475**
**13.11.1991 GB 9124066**

(43) Date of publication of application:
**14.04.1993 Bulletin 1993/15**

(73) Proprietor: **CABOT PLASTICS LIMITED**
**Dukinfield, Cheshire SK16 4RU (GB)**

(72) Inventors:
- **Guilfoy, Andrew Austin**
  **Lancashire, OC13 9QG (GB)**
- **Whitehouse, Robert Sydney**
  **Bury, Lancashire BL0 0LT (GB)**

(74) Representative: **Lishman, Peter David**
**Coleshill, Warwickshire B46 2SD (GB)**

(56) References cited:
**EP-A- 0 245 103**
**EP-A- 0 254 477**
**EP-A- 0 405 192**

- **CHEMICAL ABSTRACTS, vol. 108, no. 10, 1987, Columbus, Ohio, US; abstract no. 76457y ; YOSHIZUMI ET AL. :"Electroconductive Resin Compositions" ; & JP-A62131064**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 536 890 B1

## Description

Antistatic additives for polymers, to produce antistatic polymeric compositions, are known which comprise polymers derived from ethylene oxide and at least one other monomer selected from an epihalohydrin, propylene oxide and a cyclic monomer represented by the formula :

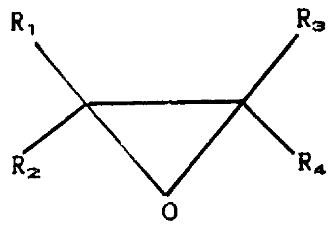

containing up to 25 carbon atoms, wherein $R_1$, $R_2$, $R_3$ and $R_4$ are selected from hydrogen, saturated aliphatic and cycloaliphatic, monoolefinic aliphatic and cycloaliphatic, diolefinic (conjugated and non-- conjugated) aliphatic and cycloaliphatic, aromatic, aralkyl and alkaryl groups and wherein at least one of $R_1$, $R_2$, $R_3$ and $R_4$ is not hydrogen.

U.S. Patent Specification No. 4,931,506, assigned to The B.F. Goodrich Company, discloses an antistatic additive for polyvinyl chloride or other chlorine-containing polymers or polystyrene or other styrene-containing polymers, including but not limited to polymers of styrene and acrylonitrile such as acrylonitrile-butadiene-styrene or mixtures thereof. The antistatic additive is a copolymer containing at least 60 per cent by weight and preferably at least 80 per cent by weight of ethylene oxide with a remainder being epihalohydrin. The additive is semicrystalline and is employed in polymeric compositions in a range of from about 3 per cent to about 35 per cent by weight and the polymeric materials mentioned are employed in a range from about 65 per cent to about 97 per cent by weight.

According to the said Specification, the polymeric compositions described can have surface resistivities down to about $10^{12}$ ohm/sq.

U.S. Patent Specification No. 4,719,263, also assigned to The B.F. Goodrich Company, discloses the use of such antistatic additives in polyvinyl chloride, acrylonitrile-butadiene-styrene and nylon polymeric materials. U.S. Patent Specification No. 5,010,139, also assigned to The B.F. Goodrich Company, discloses the use of a solid nonionic high molecular weight copolymer of ethylene oxide as an antistatic additive in various polymeric materials, such as polyvinyl chloride, terpolymer of acrylonitrile-butadiene-styrene, chlorinated polyvinyl chloride, polyamides such as nylon 66, polyesters and polycarbonates.

Commercially-available antistatic materials sold by The B.F. Goodrich Company under their Trade Mark "Stat-Rite" are believed to be antistatic additives as described in the above-mentioned Specifications.

We have found that antistatic additives as described above can be used with polypropylene and other polymers not mentioned in the above Specifications to produce antistatic polymeric compositions. For example, with 40% Stat-Rite C-2100 in polypropylene, surface resistivity of about $10^9$ ohm/sq. can be obtained. However, the composition has poor mechanical properties and if used for moulding produces articles with poor strength and surface blemishes.

Other known antistatic agents for use in polymers to produce antistatic polymeric compositions are surface active agents. By a surface active agent we mean a material the molecule of which contains a functional group capable of forming hydrogen bonds or charged species with hydroxyl groups present in organic molecules or on the surface of an inorganic particle having surface hydroxyl functionality. Preferred functional groups in the molecule are those containing nitrogen, sulphur and phosphorus atoms which are indirectly linked by organometallic species based on titanates, zirconates or zircoaluminates.

According to this invention an antistatic polymeric composition comprising a base polymer, constituting 20 to 98.9 per cent by weight of the composition, is characterised by the presence of both a surface active agent constituting 0.1 to 30 per cent by weight of the composition and an antistatic additive constituting 1 to 50 per cent by weight of the composition, the surface active agent comprising at least one compound selected from an amino, sulphonyl or phosphonyl titanate, zirconate or zircoaluminate and the antistatic additive being a polymer derived from ethylene oxide and at least one other monomer selected from an epihalohydrin, propylene oxide, and a cyclic monomer represented by the formula :

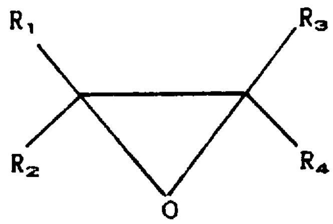

containing up to 25 carbon atoms, wherein $R_1$, $R_2$, $R_3$ and $R_4$ are selected from hydrogen, saturated aliphatic and cycloaliphatic, monoolefinic aliphatic and cycloaliphatic, diolefinic (conjugated and non-- conjugated) aliphatic and cycloaliphatic, aromatic, aralkyl and alkaryl groups and wherein at least one of $R_1$, $R_2$, $R_3$ and $R_4$ is not hydrogen.

Preferred antistatic additives are polymers derived from ethylene oxide and either an epihalohydrin or propylene oxide and, optionally in either case, the said cyclic monomer.

The antistatic polymeric composition may include a compatabilizer, constituting from 1 to 10 per cent of the composition, to promote blending of the polymer with the surface active agent and the antistatic additive, the compatibilizer having functional groups containing at least one of the following : ester, carboxylic acid, anhydride, amino, amine (primary, secondary or tertiary), amide, sulphonyl, cyclic ether or nitrogen.

The surface active agent may be a combination of an amino titanate and a sulphonyl titanate. It may, for example, be a combination of two or more compounds selected from amino titanates, sulphonyl titanates, amino zirconates and sulphonyl zirconates. Such materials are described as "antistatic agents" in U.S. Patent Specification No. 4,715,968, assigned to Kenrich Petrochemicals Inc.

A preferred surface active agent has the formula either

$$ROM\ (A)_a(B)_b(C)_c$$

or

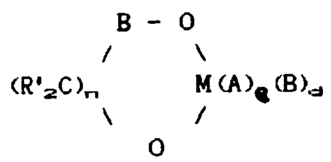

where M is titanium or zirconium, R is a monovalent alkyl, alkenyl, alkynyl, aralkyl, aryl or alkaryl group having up to 20 carbon atoms or an ether substituted derivative thereof and A is either an oxyalkyl amino, an oxyaryl amino or a sulphonyl group; B and C are each independently oxyalkyl amino, oxyaryl amino, sulphonyl, a monovalent aroxy, thioaroxy, diester phosphate, diester pyrophosphate or a carboxyl group each containing up to 30 carbon atoms; a is 1 to 3, b + c is 0 to 2, a + b + c is 3, R' is hydrogen or an alkyl group having 1 to 6 carbon atoms, B is a R'C or a carbonyl group, n is 1 or 2, d is 1 or 2 and d + e is 2.

The antistatic polymeric composition may include a powdered mineral filler, constituting 0.1 to 70 per cent by weight of the composition. The filler may be, for example, a metal oxide such as an oxide of titanium, zinc, tin, antimony or aluminium, or silicon oxide or a metal silicate, aluminosilicate or carbonate.

The base polymer may be a thermoplastic comprising at least one of ethylene homopolymers and copolymers, propylene homopolymers and copolymers, styrene homopolymers and copolymers, aliphatic and aromatic polyesters, polyamides, polycarbonates and elastomers. However, it is believed that other thermoplastic polymers may be used, including all those mentioned in the above-mentioned U.S. Patent Specifications Nos. 4,715,968, 4,719,263, 4,931,506, and 5,010,139.

Surprisingly, although both antistatic additives and surface active agents as described above are known to be capable of producing polymeric compositions having antistatic properties, we believe that it has not previously been proposed to use both together. The result of that step has been to produce antistatic polymeric compositions having lower resistivities and/or better mechanical properties than can be produced by the use of either antistatic additive or surface active agent alone. Furthermore, when a metal oxide is included the useful lifetime of the antistatic polymeric compositions can be prolonged. According to British Standard Specification No. BS 5753 and European Standard No. CECC00015 a static dissipative material should have surface resistivity below $10^{10}$ ohm/sq. By the useful lifetime of a conductive polymeric composition we mean the time during which the surface resistivity (measured by the method specified in DIN Specification No. 53482) remains below that figure.

The invention will be illustrated by reference to the following compositions, in which composition 1 is an example of a conductive polymeric composition according to the invention and compositions 2 and 3 are comparative examples in which, respectively, the antistatic additive and the surface active agent were omitted. The compositions are shown in

Table 1.

TABLE 1

| Compositions 1 to 3 - the numbers indicate percentages by weight. | | | |
|---|---|---|---|
| Composition | 1 | 2 | 3 |
| Base polymer - Polypropylene | 54 | 84 | 48 |
| Antistatic additive - Stat-Rite C-2100 | 30 | | 40 |
| Surface active agent - Ken-Stat KSN100 | 4 | 4 | |
| Powdered titanium dioxide | 5 | 5 | 5 |
| Compatibilizer (Bennett GR 110) | 5 | 5 | 5 |
| Coloured pigment | 2 | 2 | 2 |

"Ken-Stat" is a Trade Mark of Kenrich Petrochemicals Inc. Ken-Stat KSN100 is a mixture of titanium IV neoalkoxy, tris (dodecyl phenyl) sulphato-O and titanium IV amino alkoxy compound with the chemical structure :

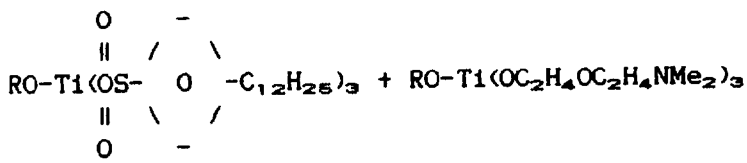

where RO is the alkoxy group.

"Stat-Rite" is a Trade Mark of The B.F. Goodrich Company. Stat-Rite C-2100 is believed to be a terpolymer comprising ethylene oxide, epichlorohydrin and the above-mentioned cyclic monomer.

Four similar test pieces were produced from each of the compositions 1 to 3 by injection moulding. The test pieces produced from composition 3 exhibited severe delamination and surface defects under all moulding conditions, whereas those produced from composition 1 showed neither delamination nor surface defects. Each test piece was subjected to an extended surface resistivity test. The surface resistivity of the test piece was first measured (by the method specified in DIN Specification No. 53482) under ambient conditions and then the test piece was placed in a controlled atmosphere at 90°C and 20% Relative Humidity. After 24 hours the surface resistivity was again measured and thereafter it was measured from time to time. The test piece was then withdrawn from the controlled atmosphere and allowed to return to ambient conditions over a 24-hour period, after which a final measurement was made. The accompanying drawing is a graphical representation of the results of the tests, each of the three lines, numbered 1, 2 and 3, indicating the average of the measurements made on the four test pieces moulded from the respective composition.

It will be observed that during the initial 24-hour period the resistivity of each composition decreased and thereafter there was a progressive increase. Composition 1 exhibited the lowest resistivities throughout the test, showing an initial resistivity of $0.18 \times 10^{10}$ ohm/sq. under ambient conditions, falling to $0.02 \times 10^{10}$ ohm/sq. as it reached the test conditions and reaching a maximum of $0.08 \times 10^{10}$ ohm/sq. at the end of the 1000 hour period before rising to $0.4 \times 10^{10}$ ohm/sq. as it returned to ambient conditions. Composition 2 soon exceeded $1 \times 10^{10}$ ohm/sq., so could not be considered a satisfactory static dissipative material. Composition 3 showed resistivities not substantially greater than those of Composition 1, but suffered from delamination and surface defects as previously mentioned.

Further comparison between compositions according to the invention and similar compositions from which either the antistatic additive or the surface active agent has been omitted is made with reference to compositions 4 to 29.

TABLE 2 - Compositions 4 to 11, the numbers indicate percentages by weight :

| Composition | 4 | 5 | 6 | 7 |
|---|---|---|---|---|
| Base polymer - Polypropylene | 70 | 65 | 63 | 58 |
| Antistatic additive - Stat-Rite C-2100 | 30 | 30 | 30 | 30 |
| Surface active agent - Ken-Stat KSN100 | | | 2 | 2 |
| Filler - Powdered titanium dioxide | | 5 | 5 | 5 |
| Compatibilizer (Bennett GR 110) | | | | 5 |
| Impact strength ($kJ/m^2$) | 6.14 | 6.52 | 7.34 | 18.10 |
| Surface resistivity (ohm/sq. x $10^{10}$) : | | | | |
| After 2 hours | 1.5 | 0.17 | 0.06 | 0.81 |
| After 1000 hours | 3.0 | 0.22 | 0.25 | 0.50 |

("Bennett" is a Trade Mark.)

TABLE 2 - Continuation.

| Composition | 8 | 9 | 10 | 11 |
|---|---|---|---|---|
| Base polymer - Polypropylene | 60 | 55 | 53 | 48 |
| Antistatic additive - Hydrin C65 | 40 | 40 | 40 | 40 |
| Surface active agent - Ken-Stat KSN100 | | | 2 | 2 |
| Filler - Powdered titanium dioxide | | 5 | 5 | 5 |
| Compatibilizer (Bennett GR 110) | | | | 5 |
| Impact strength ($kJ/m^2$) | 5.66 | 5.68 | 7.10 | 31.00 |
| Surface resistivity (ohm/sq. x $10^{10}$) : | | | | |
| After 2 hours | 1.4 | 2.1 | 0.48 | 0.16 |
| After 1000 hours | 2.0 | 4.0 | 0.75 | 0.48 |

("Hydrin" is a Trade Mark)

From Table 2 it is evident that Compositions 6, 7, 10 and 11, which contain both an antistatic additive and a surface active agent in accordance with the invention, have clear advantages over Compositions 4, 5, 8 and 9 which do not contain a surface active agent. Notably they show significantly lower surface resistivity, within the range required by BS 5753 and CECC00015 for a static dissipative material, and/or improved impact strength. Compositions 7 and 11 demonstrate the further improvement in impact strength obtained by including a compatabilizer.

TABLE 3

| Compositions 12 to 21, the numbers indicate percentages by weight : | | | | |
|---|---|---|---|---|
| Composition | 12 | 13 | 14 | 15 |
| Base polymer - Low density polyethylene | 98 | 70 | 68 | 63 |

Continuation of the Table on the next page

TABLE 3 (continued)

| Compositions 12 to 21, the numbers indicate percentages by weight : | | | | |
|---|---|---|---|---|
| Composition | 12 | 13 | 14 | 15 |
| Antistatic additive - Hydrin C65 | | 30 | 30 | 30 |
| Surface active agent - Ken-Stat KSN100 | 2 | | 2 | 2 |
| Filler - Powdered titanium dioxide | | | | 5 |
| Surface resistivity (ohm/sq. x $10^{10}$) | >20 | >20 | 0.21 | 0.1 |
| Composition | 16 | 17 | 18 | |
| Base polymer - Crystal polystyrene | 93 | 65 | 63 | |
| Antistatic additive - Hydrin C65 | | 30 | 30 | |
| Surface active agent - Ken-Stat KSN100 | 2 | | 2 | |
| Compatibilizer (Bennett GR 110) | 5 | 5 | 5 | |
| Surface resistivity (ohm/sq. x $10^{10}$) | >20 | 12 | 0.09 | |
| Composition | 19 | 20 | 21 | |
| Base polymer - Ethylene vinyl acetate UL 00218 (18% VA) (Exxon) | 98 | 70 | 68 | |
| Antistatic additive - Hydrin C65 | | 30 | 30 | |
| Surface active agent - Ken-Stat KSN100 | 2 | | 2 | |
| Surface resistivity (ohm/sq. x $10^{10}$) | >20 | >20 | 0.1 | |

The surface resistivity measurements were made several days after preparation of the test specimens to allow for ageing. From Table 3 it is seen that Compositions 14, 15, 18 and 21 embodying the invention have surface resistivities conforming to BS 5753 and CECC00015 for static dissipative materials whereas the other compositions have much higher resistivities.

TABLE 4

| Compositions 22 to 25, the numbers indicate percentages by weight : | | | | |
|---|---|---|---|---|
| Composition | 22 | 23 | 24 | 25 |
| Base polymer - Ethylene vinyl acetate UL 00218 (18% VA) (Exxon) | 78 | 88 | 78 | 70 |
| Surface active agent - Ken-Stat KSQ70 | 15 | | 10 | 10 |
| Antistatic additive - Stat-Rite C-2100 | | 5 | 5 | 8 |
| Filler - Powdered titanium dioxide | 5 | 5 | 5 | 5 |
| Compatibilizer (Bennett GR 110) | | | | 5 |
| Pigment MB | 2 | 2 | 2 | 2 |
| Surface resistivity (ohm/sq. x $10^{10}$) (measured after several days) | 10 | 20 | 0.5 | 0.2 |

TABLE 5

| Compositions 26 to 29, the numbers indicate percentages by weight : | | | | |
|---|---|---|---|---|
| Composition | 26 | 27 | 28 | 29 |
| Base polymer - Ethylene vinyl acetate UL 00218 (18% VA) (Exxon) | 67 | | | |
| Ethylene vinyl acetate UL 00226 (Exxon) | | 75 | 71 | 77 |
| Surface active agent - Ken-Stat KSQ70 | 20 | 20 | 20 | 10 |
| Antistatic additive - Stat-Rite C-2100 | 2 | 2 | 1 | 2 |
| Filler - Powdered titanium dioxide | 5 | 2 | 2 | 5 |
| Compatibiliser (Bennett GR 110) | 5 | | 5 | 5 |
| Pigment MB | 1 | 1 | 1 | 1 |
| Surface resistivity (ohm/sq. x $10^{10}$) (measured after several days) | 0.11 | 0.12 | 0.4 | 0.18 |

Tables 4 and 5 further demonstrate that compositions embodying the invention, 24, 25 and 26 to 29 show significantly improved conductivity (lower resistivity), complying with BS 5753 and CECC00015 for static dissipative materials, compared with compositions which contain either a surface active agent or an antistatic additive but not both. Collectively, the five tables show that formulations showing this effect may have proportions of surface active agent and antistatic additive varied within wide limits and may employ a variety of base polymers.

## Claims

1. An antistatic polymeric composition comprising a base polymer, constituting 20 to 98.9 per cent by weight of the composition, characterised by the presence of both a surface active agent constituting 0.1 to 30 per cent by weight of the composition and an antistatic additive constituting 1 to 50 per cent by weight of the composition, wherein the surface active agent comprises at least one compound selected from an amino, sulphonyl or phosphonyl titanate, zirconate or zircoaluminate and the antistatic additive is a polymer derived from ethylene oxide and at least one other monomer selected from an epihalohydrin, propylene oxide and a cyclic monomer represented by the formula :

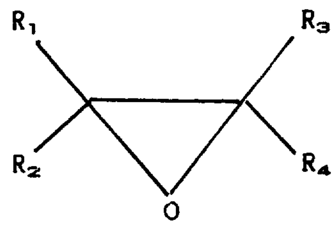

containing up to 25 carbon atoms, wherein $R_1$, $R_2$, $R_3$ and $R_4$ are selected from hydrogen, saturated aliphatic and cycloaliphatic, monoolefinic aliphatic and cycloaliphatic, diolefinic (conjugated and non-- conjugated) aliphatic and cycloaliphatic, aromatic, aralkyl and alkaryl groups and wherein at least one of $R_1$, $R_2$, $R_3$ and $R_4$ is not hydrogen.

2. An antistatic polymeric composition as claimed in Claim 1 characterised in that the antistatic additive is a polymer derived from ethylene oxide and either an epihalohydrin or propylene oxide and, optionally in either case, the said cyclic monomer.

3. An antistatic polymeric composition as claimed in Claim 1 or Claim 2 characterised by including a compatabilizer constituting from 1 to 10 per cent of the composition, the compatibilizer having functional groups containing at least one of the following : ester, carboxylic acid, anhydride, amino, amine (primary, secondary or tertiary), amide, sulphonyl, cyclic ether or nitrogen.

4. An antistatic polymeric composition as claimed in any of Claims 1 to 3 characterised in that the surface active agent is a combination of an amino titanate and a sulphonyl titanate.

5. An antistatic polymeric composition as claimed in any of Claims 1 to 3 characterised in that the surface active agent is a combination of two or more compounds selected from amino titanates, sulphonyl titanates, amino zirconates and sulphonyl zirconates.

6. An antistatic polymeric composition as claimed in any of Claims 1 to 3 characterised in that the surface active agent has the formula either

$$ROM\ (A)_a(B)_b(C)_c$$

or

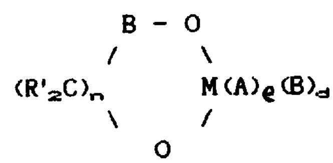

where M is titanium or zirconium, R is a monovalent alkyl, alkenyl, alkynyl, aralkyl, aryl or alkaryl group having up to 20 carbon atoms or an ether substituted derivative thereof and A is either an oxyalkyl amino, an oxyaryl amino or a sulphonyl group; B and C are each independently oxyalkyl amino, oxyaryl amino, sulphonyl, a monovalent

aroxy, thioaroxy, diester phosphate, diester pyrophosphate or a carboxyl group each containing up to 30 carbon atoms; a is 1 to 3, b + c is 0 to 2, a + b + c is 3, R' is hydrogen or an alkyl group having 1 to 6 carbon atoms, B is a R'C or a carbonyl group, n is 1 or 2, d is 1 or 2 and d + e is 2.

7. An antistatic polymeric composition as claimed in any preceding claim characterised by including a powdered mineral filler, constituting 0.1 to 70 per cent by weight of the composition.

8. An antistatic polymeric composition as claimed in Claim 7 characterised in that the mineral filler is a metal oxide, silicate, aluminosilicate or carbonate or silicon oxide.

9. An antistatic polymeric composition as claimed in Claim 8 characterised in that the metal oxide is an oxide of titanium, zinc, tin, antimony or aluminium.

10. An antistatic polymeric composition as claimed in any preceding claim characterised in that the base polymer is a thermoplastic comprising at least one of ethylene homopolymers and copolymers, propylene homopolymers and copolymers, styrene homopolymers and copolymers, aliphatic and aromatic polyesters, polyamides, polycarbonates and elastomers.

11. An antistatic polymeric composition as claimed in any preceding claim characterised by including a pigment.

**Patentansprüche**

1. Antistatische Polymerzusammensetzung, enthaltend ein Basis-Polymer, welches 20 bis 98,9 Gew.-% der Zusammensetzung bildet,
**gekennzeichnet** durch das Vorhandensein sowohl eines oberflächenaktiven Mittels, welches 0,1 bis 30 Gew.-% der Zusammensetzung ausmacht, wie auch eines antistatischen Additivs, welches 1 bis 50 Gew.-% der Zusammensetzung ausmacht, wobei das oberflächenaktive Mittel mindestens eine Verbindung, ausgewählt aus einem Amino-, Sulfonyl- oder Phosphonyltitanat, Zirconat oder Zirconiumaluminat enthält, und das antistatische Additiv ein Polymer ist, abstammend von Ethylenoxid und mindestens einem anderen Monomeren, ausgewählt aus einem Epihalohydrin, Propylenoxid und einem durch die Formel

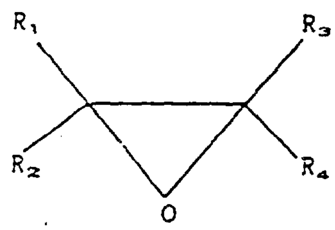

dargestellten cyclischen Monomeren, enthaltend bis zu 25 Kohlenstoffatome, wobei $R_1$, $R_2$, $R_3$ und $R_4$ ausgewählt sind aus Wasserstoff, gesättigten aliphatischen und cycloaliphatischen, monoolefinischen aliphatischen und cycloaliphatischen, diolefinischen (konjugierten und nicht-konjugierten) aliphatischen und cycloaliphatischen, aromatischen, Aralkyl- und Alkaryl-Gruppen, und wobei mindestens einer der Reste $R_1$, $R_2$, $R_3$ und $R_4$ nicht Wasserstoff ist.

2. Antistatische Polymerzusammensetzung nach Anspruch 1,
dadurch **gekennzeichnet**, daß das antistatische Additiv ein Polymer ist, welches von Ethylenoxid und entweder einem Epihalohydrin oder Propylenoxid und, gewünschtenfalls in jedem der beiden Fälle, dem cyclischen Monomeren abstammt.

3. Antistatische Polymerzusammensetzung nach Anspruch 1 oder 2,
dadurch **gekennzeichnet**, daß sie einen Kompatibilisator enthält, welcher 1 bis 10 % der Zusammensetzung ausmacht, wobei der Kompatibilisator funktionelle Gruppen aufweist, welche mindestens eine der folgenden enthalten: Ester, Carbonsäure, Anhydrid, Amino, Amin (primäres, sekundäres oder tertiäres), Amid, Sulfonyl, cyclischer Ether oder Stickstoff.

4. Antistatische Polymerzusanmensetzung nach einem der Ansprüche 1 bis 3,
dadurch **gekennzeichnet**, daß das oberflächenaktive Mittel eine Kombination aus einem Aminotitanat und einem Sulfonyltitanat ist.

5. Antistatische Polymerzusammensetzung nach einem der Ansprüche 1 bis 3, dadurch **gekennzeichnet**, daß das oberflächenaktive Mittel eine Kombination aus zwei oder mehreren Verbindungen, ausgewählt aus Aminotitanaten, Sulfonyltitanaten, Aminozirconaten und Sulfonylzirconaten ist.

6. Antistatische Polymerzusammensetzung nach einem der Ansprüche 1 bis 3, dadurch **gekennzeichnet**, daß das oberflächenaktive Mittel entweder die Formel

$$ROM(A)_a(B)_b(C)_c$$

oder

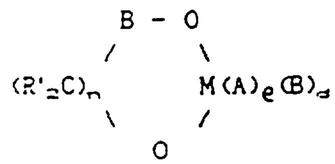

hat, wobei M Titan oder Zirconium ist, R eine monovalente Alkyl-, Alkenyl-, Alkinyl-, Aralkyl-, Aryl - oder Alkaryl-Gruppe mit bis zu 20 Kohlenstoffatomen oder ein Ether-substituiertes Derivat davon ist, und A entweder eine Oxyalkylamino-, eine Oxyarylamino- oder eine Sulfonyl-Gruppe ist, B und C unabhängig voneinander jeweils Oxyalkylamino-, Oxyarylamino-, Sulfonyl-, eine monovalente Aroxy-, Thioaroxy-, Diesterphosphat-, Diesterpyrophosphat- oder eine Carboxyl-Gruppe sind, welche jeweils bis zu 30 Kohlenstoffatome enthalten, a 1 bis 3 ist, b + c 0 bis 2 ist, a + b + c 3 ist, R' Wasserstoff oder eine Alkyl-Gruppe mit 1 bis 6 Kohlenstoffatomen ist, B eine R'C- oder eine Carbonyl-Gruppe ist, n 1 oder 2 ist, d 1 oder 2 ist und d + e 2 ist.

7. Antistatische Polymerzusammensetzung nach einem der vorhergehenden Ansprüche, dadurch gekennzeichnet, daß sie einen gepulverten Mineralfüllstoff enthält, welcher 0,1 bis 70 Gew.-% der Zusammensetzung ausmacht.

8. Antistatische Polymerzusammensetzung nach Anspruch 7, dadurch gekennzeichnet, daß der Mineralfüllstoff ein Metalloxid, Silicat, Aluminiumsilicat oder Carbonat oder Siliciumoxid ist.

9. Antistatische Polymerzusammensetzung nach Anspruch 8, dadurch gekennzeichnet, daß das Metalloxid ein Oxid von Titan, Zink, Zinn, Antimon oder Aluminium ist.

10. Antistatische Polymerzusammensetzung nach einem der vorhergehenden Ansprüche, dadurch gekennzeichnet, daß das Basis-Polymer ein Thermoplast ist, welcher mindestens eines aus Ethylen-Homopolymeren und -Copolymeren, Propylen-Homopolymeren und -Copolymeren, Styrol-Homopolymeren und -Copolymeren, aliphatischen und aromatischen Polyestern, Polyamiden, Polycarbonaten und Elastomeren umfaßt.

11. Antistatische Polymerzusammensetzung nach einem der vorhergehenden Ansprüche, dadurch gekennzeichnet, daß sie ein Pigment enthält.

**Revendications**

1. Composition polymère antistatique comprenant un polymère de base, constituant 20 à 98,9 pour cent en poids de la composition, caractérisée par la présence à la fois d'un agent tensio-actif constituant 0,1 à 30 pour cent en poids de la composition et un additif antistatique constituant 1 à 50 pour cent en poids de la composition, dans laquelle l'agent tensio-actif comprend au moins un composé choisi parmi un amino, un sulfonyle ou phosphonyl titanate, un zirconate ou zircoaluminate et l'additif antistatique est un polymère dérivant de l'oxyde d'éthylène et d'au moins un autre monomère choisi parmi une épihalohydrine, l'oxyde de propylène et un monomère cyclique représenté par la formule :

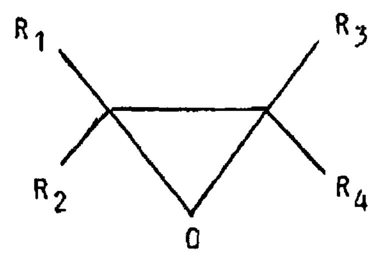

contenant jusqu'à 25 atomes de carbone, dans laquelle $R_1$, $R_2$, $R_3$ et $R_4$ sont choisis parmi l'hydrogène, les groupes cycloaliphatique et aliphatique saturés, cycloaliphatique et aliphatique monooléfinique, cycloaliphatique et aliphatique (conjugué et non-conjugué) dioléfinique, aromatique, aralkyle et alkaryle, et dans laquelle au moins l'un des $R_1$, $R_2$, $R_3$ et $R_4$. n'est pas l'hydrogène.

**2.** Composition polymère antistatique selon la Revendication 1, caractérisée en ce que l'additif antistatique est un polymère dérivant de l'oxyde d'éthylène et de soit une épihalohydrine soit de l'oxyde de propylène et, facultativement, dans l'un et l'autre cas, ledit monomère cyclique.

**3.** Composition polymère antistatique selon la Revendication 1 ou la Revendication 2, caractérisée par l'incorporation d'un agent de compatibilité constituant de 1 à 10 pour cent de la composition, l'agent de compatibilité ayant des groupes fonctionnels contenant au moins l'un des éléments suivants : ester, acide carboxylique, anhydride, amino, amine (primaire, secondaire ou tertiaire), amide, sulfonyle, éther cyclique ou azote.

**4.** Composition polymère antistatique selon l'une quelconque des Revendications 1 à 3, caractérisée en ce que l'agent tensio-actif est une combinaison d'un amino titanate et d'un sulfonyl titanate.

**5.** Composition polymère antistatique selon l'une quelconque des Revendications 1 à 3, caractérisée en ce que l'agent tensio-actif est une combinaison de deux composés ou plus choisis parmi les amino titanates, sulfonyl titanates, amino zirconates et sulfonyl zirconates.

**6.** Composition polymère antistatique selon l'une quelconque des Revendications 1 à 3, caractérisée en ce que l'agent tensio-actif présente la formule :

$$ROM(A)_a(B)_b(C)_c$$

ou bien

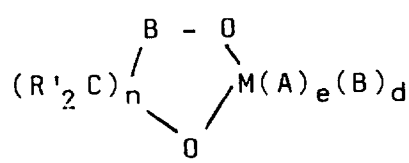

où M est le titane ou le zirconium, R est un groupe monovalent alkyle, alcényle, alcynyle, aralkyle, aryle ou alkaryle ayant jusqu'à 20 atomes de carbone ou un dérivé de celui-ci substitué par éther, et A est soit un groupe oxyalkyl amino, oxyaryl amino ou sulfonyle; B et C sont chacun indépendamment oxyalkyl amino, oxyaryl amino, sulfonyle, aroxy monovalent, thioaroxy, diester phosphate, diester pyrophosphate ou un groupe carboxyle, chacun contenant jusquà 30 atomes de carbone; a est 1 à 3, b + c est 0 à 2, a + b + c est 3, R' est l'hydrogène ou un groupe alkyle ayant de 1 à 6 atomes de carbone, B est un groupe R'C ou un groupe carbonyle, n est 1 ou 2, d est 1 ou 2 et d + e est 2.

**7.** Composition polymère anti-statique selon l'une quelconque des revendications précédentes, caractérisée en ce qu'elle comprend une charge minérale pulvérulente constituant de 0,1 à 70 pour cent en poids de la composition.

**8.** Composition polymère anti-statique selon la revendication 7, caractérisée en ce que la charge minérale est un oxyde métallique, un silicate, un alumino-silicate ou du carbonate, ou de l'oxyde de silicium.

**9.** Composition polymère anti-statique selon la revendication 8, caractérisée en ce que l'oxyde métallique est un oxyde de titane, de zinc, d'étain, d'antimoine ou d'aluminium.

**10.** Composition polymère anti-statique selon l'une quelconque des revendications précédentes, caractérisée en ce

que le polymère de base est un thermoplastique comprenant au moins l'un des produits suivants : copolymères et homopolymères d'éthylène, copolymères et homopolymères de propylène, copolymères et homopolymères de styrène, polyesters aromatiques et aliphatiques, polyamides, polycarbonates et élastomères.

**11.** Composition polymère anti-statique selon l'une des revendications précédentes, caractérisée en ce qu'elle comprend un pigment.

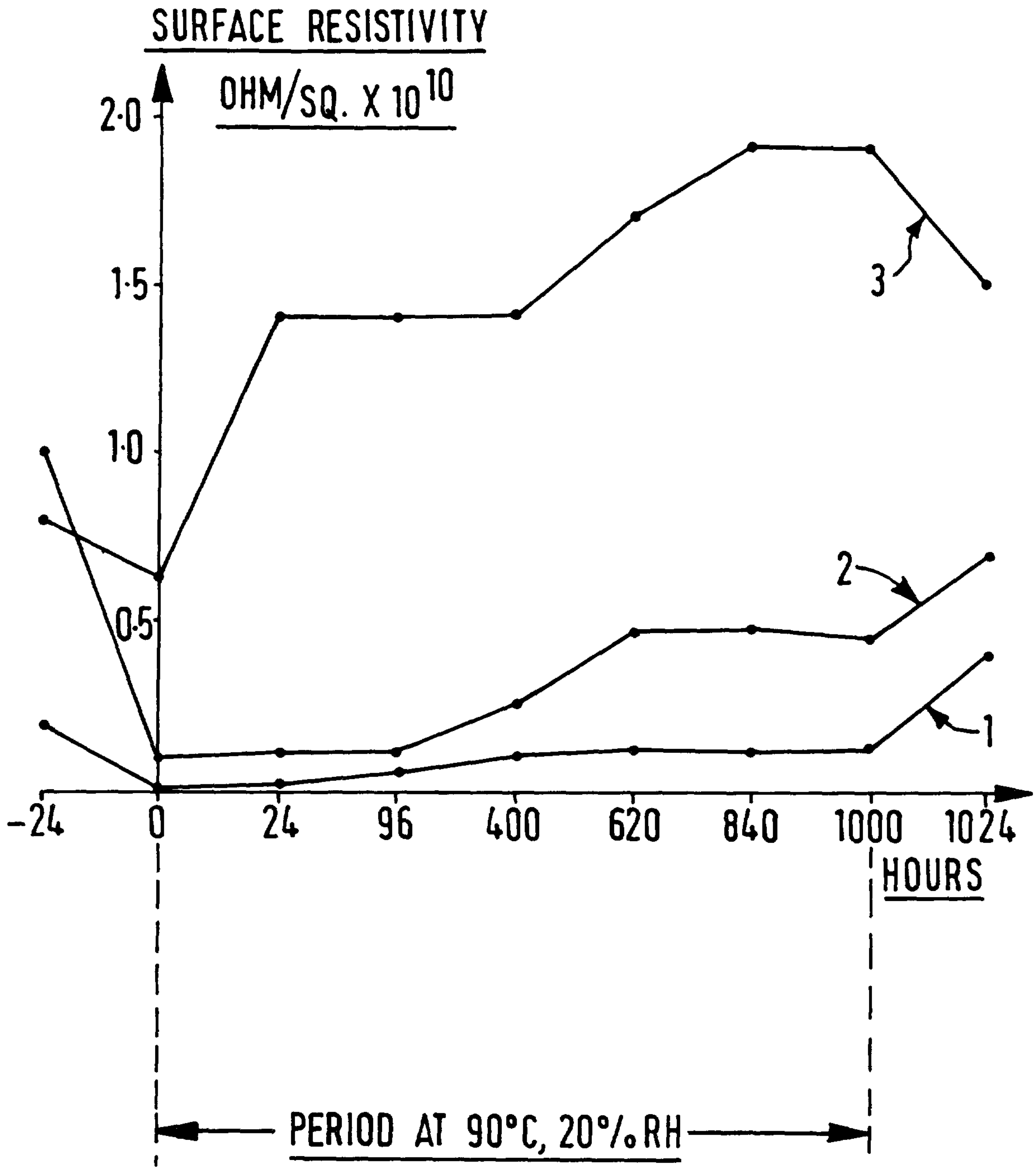
SURFACE RESISTIVITY
OHM/SQ. X 10^10
2·0
1·5
1·0
0·5
3
2
1
-24
0
24
96
400
620
840
1000
1024
HOURS
PERIOD AT 90°C, 20%RH